# EUROPEAN PATENT APPLICATION

(11) **EP 2 141 603 A1**
(43) Date of publication of application: **06.01.2010**
(21) Application number: 09169571.8
(22) Date of filing: 25.04.2003
(51) Int. Cl.: G06F 13/00, G06F 9/06, H04L 12/58, H04L 29/06

(54) **Messaging virus protection program and the like**

(62) Divisional of application: 03816784.7
(71) Applicant: FUJITSU LIMITED, Kawasaki-shi, Kanagawa 211-8588 (JP)
(72) Inventor: Suzuki, Norihiko, Kawasaki-shi, Kanagawa 211-8588 (JP); Yamasaki, Hiroshi, Kawasaki-shi, Kanagawa 211-8588 (JP)
(74) Representative: Stebbing, Timothy Charles

(57) **Abstract**

A messaging virus protection program which causes a computer to deal with messaging viruses that are transmitted along with the delivery of electronic information on a network, **characterized in that** said computer is caused to execute the steps of:
determining, when electronic information with said messaging virus is received, whether or not the messaging virus attached to said received electronic information is an unspecified file attachment type virus that attaches and transmits an arbitrary file in a computer, this being determined on the basis of predetermined characteristics of the messaging virus; and
transmitting said received electronic information to the transmission destination in cases where it is determined that said received messaging virus is not an unspecified file attachment type virus, but not transmitting said received electronic information in cases where it is determined that said received messaging virus is an unspecified file attachment type virus.

## Description

### TECHNICAL FIELD

The present invention relates to a messaging virus protection program and the like used to perform processing for messaging viruses that are transmitted along with the movement of electronic information comprising mainly email, and more particularly relates to a messaging virus protection program and the like that are effective against new types of viruses, viruses that misrepresent the transmission source, and viruses that are transmitted with the attachment of arbitrary files.

### BACKGROUND ART

In recent years, there has been an increase in infection by viruses that are transmitted along with the movement of electronic information such as email and the like (hereafter referred to as "messaging viruses"). Systems that inspect emails for viruses and the like have been proposed in the past in order to suppress damage caused by such messaging viruses. In such conventional systems, the contents of files attached to the email are generally inspected prior to the delivery of the email to the transmission destination, and in cases where an agreement with the predefined characteristics of viruses is seen, measures that delete the viruses are taken (for example, see the following Patent Document 1). Ordinarily, furthermore, when a virus is detected, a message indicating that a virus has been detected is sent to the transmission source of the email in question. Furthermore, in Patent Document 2 described below, countermeasures and the like against viruses which are devised so that a virus of the same type is transmitted to mail addresses registered in the mail address books of infected clients are proposed.

However, in the abovementioned conventional countermeasures, the characteristics of viruses must be grasped before the fact, and these characteristics must be defined in the system, in order to detect and delete these viruses. Consequently, when a virus of a new type appears, such a virus cannot be dealt with immediately. Accordingly, in order to prevent harm by such new types of viruses, there is no effective countermeasure other than halting the distribution of mail. Such a countermeasure has a serious effect on business (especially in companies and the like), and is therefore undesirable.

Furthermore, in cases where a given virus is a transmission source falsifying virus that misrepresents the transmission source mail address, if a message indicating virus detection is sent to the transmission source when this virus is detected as described above, this message is actually sent to a sender that has not transmitted the email in question, i. e., the message is sent to a sender that is not infected with the virus, so that this message transmission is wasted, and trouble is caused for the correspondent in question.

Furthermore, in case where a given virus is an unspecified file attachment type virus which transmits an email with one or more arbitrary files in the computer attached along with this virus, the virus is ordinarily detected in a state in which ordinary files not comprising the virus are attached by the virus to the email containing the virus. In such cases, in the abovementioned conventional systems, processing is ordinarily performed in which only the detected virus portion is deleted, and the subsequent email is transmitted; in this case, the abovementioned ordinary files attached by the virus are transmitted, so that information leakage occurs. For example, this is a problem in that information is unintentionally transmitted to the outside from companies.

Furthermore, the notification messages indicating the detection of a virus that are transmitted from the abovementioned conventional system generally have a common content, and it is desirable to make this a content that is suited to the transmission correspondent.
Patent Document 1
   Japanese Patent Application Laid-Open No. 2002-368820
Patent Document 2
   Japanese Patent Application Laid-Open No. 2002-223256

### DISCLOSURE OF THE INVENTION

It is an object of the present invention to provide a messaging virus protection program and the like used to deal with messaging viruses, this program and the like being effective against new types of viruses, transmission source falsifying viruses and unspecified file attachment type viruses.

In order to achieve the abovementioned object, in one aspect of the present invention, a messaging virus protection program that causes a computer to deal with messaging viruses that are transmitted along with the delivery of electronic information on a network is input into the computer. The computer is caused to execute the steps of judging whether or not processing is to be performed in a warning mode on the basis of information that warns or does not warn of a new type of messaging virus whose characteristics have not yet been determined, determining whether or not there is a danger of viral infection by the electronic information on the basis of specified conditions in cases where it is judged that processing is to be performed in a warning mode, storing the received electronic information without delivering this information in cases where it is determined that there is a danger of the viral infection, and delivering the received electronic information in cases where it is determined that there is no danger of the viral infection, and performing processing for the received electronic information on the basis of the characteristics of a known messaging virus whose characteristics have been determined beforehand in cases where it is judged that processing is not to be performed in the warning mode. Accordingly, when a new type of messaging virus appears, it is not necessary to suspend all mail delivery; consequently, the effects of such mail stoppage can be minimized.

Furthermore, a desirable embodiment of the abovementioned invention is **characterized in that** the delivery of the electronic information is email delivery, the specified conditions for determining whether or not there is a danger of the viral infection include at least the condition of whether or not the received email has an attached file, or the condition of whether or not information that causes the computer to perform a specified operation is contained in the main body of the received email or both of these conditions. As a result, viral infection can be determined with a high degree of certainty.

Furthermore, a desirable embodiment of the abovementioned invention is **characterized in that** at least one of HTML codes, script codes and textualized program binary data is included in the information that causes the computer to perform a specified operation.

In order to achieve the abovementioned object, in another aspect of the present invention, a messaging virus protection program which causes a computer to deal with messaging viruses that are transmitted along with the delivery of electronic information on a network causes the computer to execute the steps of determining, when electronic information with the messaging virus is received, whether or not the messaging virus attached to the received electronic information is a transmission source falsifying virus that misrepresents the transmission source of the electronic information with the messaging virus, this being determined on the basis of characteristics of messaging viruses determined beforehand, and transmitting a virus detection notification message which gives notification that a virus has been detected to the transmission source of the received electronic information in cases where it is determined that the received messaging virus is not a transmission source falsifying virus, but not transmitting the virus detection notification message in cases where it is determined that the received messaging virus is a transmission source falsifying virus. Accordingly, the present invention makes it possible to prevent the causing of any trouble to correspondents by the transmission of messages to locations that are not actually infected with the virus.

In order to achieve the abovementioned object, in another aspect of the present invention, a messaging virus protection program which causes a computer to deal with messaging viruses that are transmitted along with electronic information that is distributed between a specified network and another network causes the computer to execute the steps of determining, when electronic information with the messaging virus is received, whether or not the messaging virus attached to the received electronic information is a transmission source falsifying virus that misrepresents the transmission source of the electronic information with the messaging virus, this being determined on the basis of predetermined characteristics of the messaging virus, transmitting a virus detection notification message giving notification that a virus has been detected to the transmission source of the received electronic information in cases where it is determined that the received messaging virus is not a transmission source falsifying virus, and determining whether or not the received electronic information has been transmitted from the specified network in cases where it is determined that the received messaging virus is a transmission source falsifying virus, and transmitting the virus detection notification message in cases where it is determined that the received electronic information has been transmitted from the specified network, but not transmitting the virus detection notification message in cases where it is determined that the received electronic information has not been transmitted from the specified network.

Furthermore, in order to achieve the abovementioned object, in another aspect of the present invention, a messaging virus protection program which causes a computer to deal with messaging viruses that are transmitted along with the delivery of electronic information on a network causes the computer to execute the steps of determining, when electronic information with the messaging virus is received, whether or not the messaging virus attached to the received electronic information is an unspecified file attachment type virus that attaches and transmits an arbitrary file in a computer, this being determined on the basis of predetermined characteristics of the messaging virus, and transmitting the received electronic information to the transmission destination in cases where it is determined that the received messaging virus is not an unspecified file attachment type virus, but not transmitting the received electronic information in cases where it is determined that the received messaging virus is an unspecified file attachment type virus. As a result, the present invention makes it possible to prevent the leakage of information caused by unspecified file attachment type viruses.

Furthermore, in order to achieve the abovementioned object, in another aspect of the present invention, a messaging virus protection program which causes a computer to deal with messaging viruses that are transmitted along with electronic information that is distributed between a specified network and another network causes the computer to execute the steps of determining, when electronic information with the messaging virus is received, whether or not the messaging virus attached to the received electronic information is an unspecified file attachment type virus that attaches and transmits an arbitrary file in the computer, this being determined on the basis of predetermined characteristics of the messaging virus, transmitting the received electronic information to the transmission destination in cases where it is determined that the received messaging virus is not an unspecified file attachment type virus, and determining whether or not the received electronic information has been transmitted from the specified network in cases where it is determined that the received messaging virus is an unspecified file attachment type virus, and transmitting the received electronic information in cases where it is determined that the received electronic information has not been transmitted from the specified network, but not transmitting the received electronic information in cases where it is determined that the received electronic information has been transmitted from the specified network. As a result, the present invention makes it possible to prevent the leakage of information from the specified network caused by unspecified file attachment type viruses.

In order to achieve the abovementioned object, in still another aspect of the present invention, a messaging virus protection program which causes a computer to deal with messaging viruses that are transmitted along with electronic information that is distributed between a specified network and another network causes the computer to execute the steps of determining, when electronic information with the messaging virus is received, whether or not the received electronic information has been transmitted from the specified network, and transmitting a message provided beforehand for the specified network in cases where it is determined that the received electronic information has been transmitted from the specified network, and transmitting a message provided beforehand for the abovementioned other network in cases where it is determined that the received electronic information has not been transmitted from the specified network. As a result, notification with a content that is suited to the message transmission destination can be made, and this is effective in eradicating message viruses or preventing infection by message viruses.

Furthermore, in the abovementioned invention, a desirable embodiment is **characterized in that** the specified network is a network installed in a specified company.

Furthermore, in order to achieve the abovementioned object, in another aspect of the present invention, a messaging virus protection system which deals with messaging viruses that are transmitted along with the delivery of electronic information on a network comprises a storage unit which stores information of the characteristics of known messaging viruses whose characteristics have been determined beforehand, and a virus processing unit which judges whether or not processing is to be performed in the warning mode on the basis of information which is input into the messaging virus protection system, and which warns or does not warn of a new type of messaging virus whose characteristics have not been determined beforehand, in cases where it is judged that processing is to be performed in the warning mode, determines on the basis of specified conditions whether or not there is any danger of viral infection by the received electronic information, and in cases where it is determined that there is a danger of the viral infection, stores the received electronic information without being delivered, while in cases where it is determined that there is no danger of the viral infection, delivers the received electronic information, and in cases where it is judged that processing is not to be performed in the warning mode, performs processing for the electronic information on the basis of the characteristics of known messaging viruses stored in the storage means.

In order to achieve the abovementioned object, in still another aspect of the present invention, a messaging virus protection method in a computer system which deals with messaging viruses that are transmitted along with the delivery of electronic information on a network comprises a step where the computer system judges whether or not processing is to be performed in a warning mode on the basis of information either warning or not warning of a new type of messaging virus whose characteristics have not yet been determined, which is input into the computer, a step where the computer system determines whether or not there is a danger of viral infection by the received electronic information on the basis of specified conditions in cases where it is judged that processing is to be performed in the warning mode, stores the received electronic information without delivering the information in cases where it is determined that there is a danger of the viral infection, and delivers the received electronic information in cases where it is determined that there is no danger of the viral infection, and a step where the computer system performs processing for the received electronic information on the basis of the characteristics of known messaging viruses whose characteristics have been determined beforehand in cases where it is judged that processing is not to be performed in the warning mode.

Further objects and special features of the present invention will become clear from the best mode for carrying out the present invention described below.

### BRIEF DESCRIPTION OF THE DRAWINGS

Fig. 1 is a structural diagram of an embodiment of a messaging virus protection system using the present invention;
Fig. 2 is a flow chart which shows an example of the processing performed by the virus processing unit 10 of the messaging virus protection system 1 of the present invention;
Fig. 3 is a flow chart showing one embodiment of processing based on email dimensions;
Fig. 4 is a diagram showing an example of the description of a setting file 22 for the processing (step S11 in Fig. 3) based on the dimensions of email 6 in the present embodiment;
Fig. 5 is a flow chart showing a second embodiment of the processing (step S11 in Fig. 2) based on the dimensions of email 6;
Fig. 6 is a diagram showing an example of the description of a setting file 22 for the processing (step S11) based on the dimensions of email 6 in the second embodiment;
Fig. 7 is a flow chart showing a third embodiment of the processing (step S11 in Fig. 2) based on the dimensions of email 6;
Fig. 8 is a diagram showing an example of the description of a setting file 22 for the processing (step S11) based on the dimensions of email 6 in the third embodiment;
Fig. 9 is a flow chart showing a fourth embodiment of the processing (step S11 in Fig. 2) based on the dimension of email 6; and
Fig. 10 is a diagram showing an example of the description of a setting file 22 for the processing (step S11) based on the dimensions of email 6 in the fourth embodiment.

### BEST MODE FOR CARRYING OUT THE INVENTION

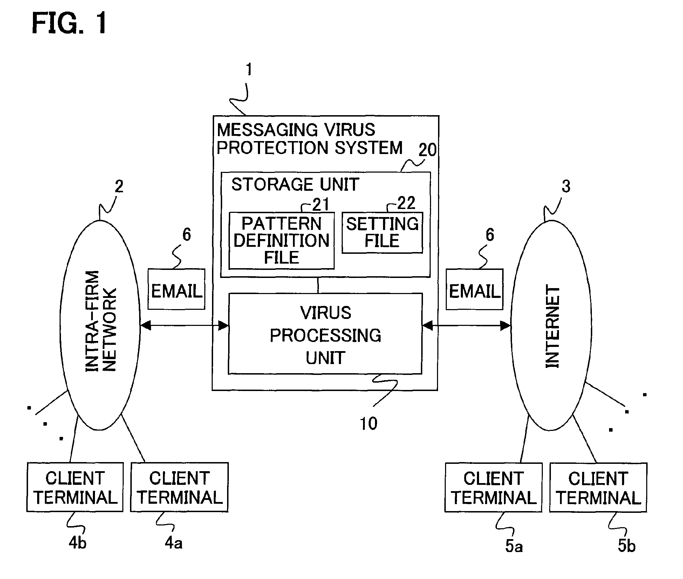

Fig. 1 is a structural diagram of an embodiment of a messaging virus protection system using the present invention. The messaging virus protection system 1 shown in Fig. 1 is a system using the messaging virus protection program of the present invention; as is shown in Fig. 1, this system is a system that deals with various types of viruses that are transmitted along with email 6 or the like that is distributed between an intra-firm network 2 and an external network (i. e., the internet 3). Such a messaging virus protection system 1 has a warning mode for new viruses, and also has special countermeasures for transmission source falsifying viruses and unspecified file attachment type viruses; this system performs a more effective and safer virus processing than conventional systems.

The intra-firm network 2 in Fig. 1 is a network such as an LAN (local area network) or the like which is installed inside a company; client terminals (4a, 4b, ...) that are used by various members of the firm are connected to this network. The client terminals (4a, 4b, ...) are constructed from personal computers or the like, and have the functions of transmitting and receiving email 6; these terminals constitute the transmission sources and transmission destinations of the email 6 that is the object of processing of the abovementioned messaging virus protection system 1. Furthermore, the intra-firm network 2 and client terminals (4a, 4b, ...) are the main objects of protection of this messaging virus protection system 1. In the present embodiment, these are designated as a network and client terminals in a company; however, it would also be possible to use a network, and client terminals that are connected to this network in an organization other than a company. Furthermore, the messaging exchange system used may also be means other than email, e. g., file transfer, downloading from the web or the like.

Next, the internet 3 shown in Fig. 1 is connected with the intra-firm network 2, and is also connected with a plurality of client terminals (5a, 5b, ...). These client terminals (5a, 5b, ...) are also constructed from personal computers or the like, and have the functions of transmitting and receiving email 6; these terminals (5a, 5b, ...) transmit and receive email 6 to and from the client terminals (4a, 4b, ...) of the intra-firm network 2. Furthermore, in the present embodiment, the internet 3 is designated; however, the network used need not be the internet, as long as this network is a network outside the company which transmits and receives email 6 to and from the intra-firm network 2.

Next, the messaging virus protection system 1 is a computer system which is installed between the intra-firm network 2 and the internet 3; email 6 between the client terminals (4a, 4b, ...) and the client terminals (5a, 5b, ...) is transmitted and received via this system. As is shown in Fig. 1, the messaging virus protection system 1 comprises a virus processing unit 10 and a storage unit 20.

The virus processing unit 10 receives email 6 that is distributed between the intra-firm network 2 and the internet 3, and performs specified processing relating to various types of viruses attached to this email 6. The concrete processing content will be described later; this virus processing unit 10 is the main part of the present invention. Furthermore, the virus processing unit 10 is constructed from a computer program which gives instructions for the processing content, a memory that reads in this computer program, a control device that performs processing in accordance with this computer program, and the like.

As is shown in Fig. 1, the storage unit 20 is a part that stores pattern definition files 21 and setting files 22; this storage unit 20 is constructed from a hard disk or the like that is provided in the computer that constitutes the messaging virus protection system 1. The pattern definition files 21 are files that define characteristics (patterns) for various existing viruses, and are used in processing when the virus processing unit 10 detects a virus. Furthermore, the setting files 22 are files that set the processing that is to be performed for respective viruses, an are read into the memory of the virus processing unit 10 when the virus processing unit 10 receives email 6. The virus processing unit 10 performs processing on the basis of the content described in these setting files 22. Furthermore, processing for various viruses in the virus processing unit 10 can be altered without altering the program of the virus processing unit 10 by altering the description of these setting files 22. Accordingly, this messaging virus protection system 1 may be said to be a system that is easily customized.

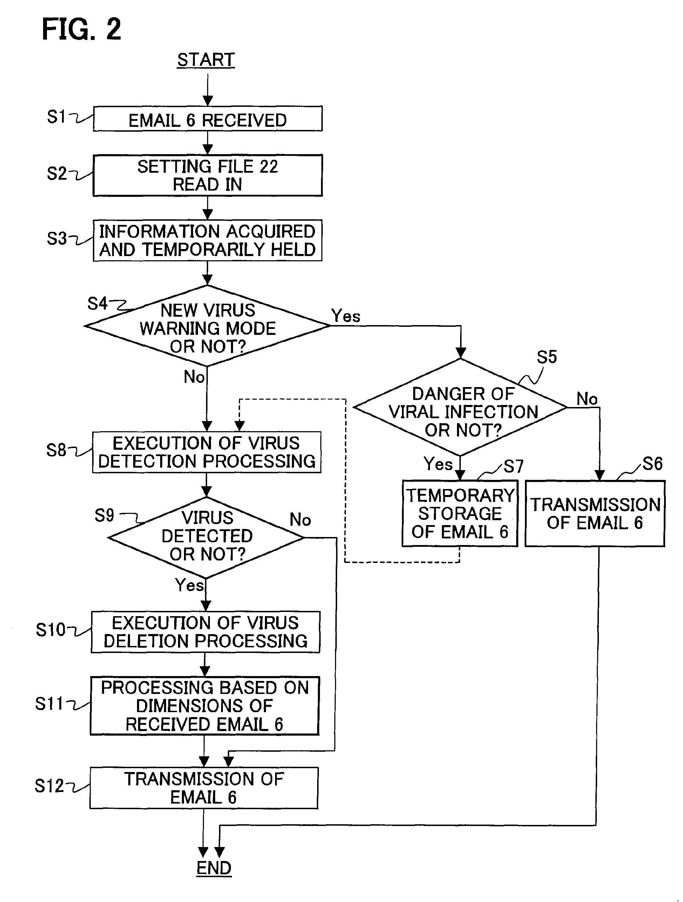

Fig. 2 is a flow chart showing an example of the processing that is performed by the virus processing unit 10 of the messaging virus protection system 1 constituting the present embodiment. The content of the processing performed by the messaging virus protection system 1 will be described below with reference to Fig. 2. First, the virus processing unit 10 receives the email 6 that is transmitted to the internet 3 from the intra-firm network 2 or to the intra-firm network 2 from the internet 3 before this email 6 is delivered to the transmission destination (step S1 in Fig. 2). The transmission sources and transmission destinations of this email 6 are the client terminals (4a, 4b, ...) inside the company, the client terminals (5a, 5b, ...) outside the company, server systems (not shown in the figures) connected to the intra-firm network 2 or internet 3, or the like.

Next, the virus processing unit 10 reads the setting file 22 into the memory from the storage unit 20 (step S2 in Fig. 2). Subsequently, the virus processing unit 10 acquires information relating to the received email 6, and temporarily holds this information in memory (step S3 in Fig. 2). This acquired and held information is information contained in the header of the email 6, information relating to the main body of the mail, and information relating to attached files. In concrete terms, this is information relating to the transmission source of the email 6, presence or absence of attached files, presence or absence of HTML (hypertext markup language), script codes describing the processing procedure such as Java Script (Java is a registered trademark of U.S. Sun Microsystems, Inc.; same below) or the like, binary data such as program execution files encoded in the text, or the like.

Next, the virus processing unit 10 judges whether or not the mode is the new virus warning mode (step S4 in Fig. 2). The new virus warning mode is a mode that warns of a new virus in cases where such a new virus (not defined in the pattern definition files 21) appears. Whether or not the new virus warning mode is to be used is determined by the manager or the like of this messaging virus protection system 1, and the results of this determination have been input into the messaging virus protection system 1. On the basis of this input information, the virus processing unit 10 judges whether or not the mode to be used is the new virus warning mode.

In cases where the information indicating that the new virus warning mode is to be used is input, so that the virus processing unit 10 judges that the mode to be used is the new virus warning mode (yes in step S4 of Fig. 2), a judgment is made as to whether or not there is a danger that the transmission destination will be infected by the virus as a result of the received email 6 (step S5 in Fig. 2). In concrete terms, a judgment is made on the basis of the following conditions in accordance with the description in the setting file 22 that has been read in.
(1) There is a file attached to the received email 6.
(2) There is an HTML code in the main body (text data) of the received email 6.
(3) There is a script code in the main body (text data) of the received email 6.
(4) There is binary data of a textualized program or the like in the main body (text data) of the received email 6.

More concretely, as one example, it is judged that there is a danger of the abovementioned viral infection if any one of the abovementioned conditions (1) through (4) is satisfied. This is used in the state of the highest warning level, in cases where there is not very much information concerning the new type of virus or the like. Furthermore, viruses ordinarily are distributed using attached files or HTML codes or the like in the main body of the mail; accordingly, the abovementioned conditions are set.

Furthermore, it would also be possible to use one or more of the abovementioned conditions (1) through (4) instead of using all of these conditions. For example, it would also be possible to use only condition (1), to judge that there is a danger of the abovementioned viral infection if there is an attached file, and to judge that there is no danger of the abovementioned viral infection if there is no attached file. This is used for example in cases where it is known that the new type of virus in question is distributed in an attached file. Thus, in cases where some degree of information has been obtained for a new type of virus, it is desirable to set the conditions in accordance with this information. Furthermore, the setting of conditions for this judgment can also be performed using the setting file 22.

Furthermore, the abovementioned conditions (2) through (4) are for determining whether or not a so-called program-like entity, i. e., information that causes the computer to perform a specified operation, is contained in the main body of the mail (i. e., in the text data). These conditions are merely examples; other conditions may also be set in order to determine whether or not such a program-like entity is contained.

Furthermore, information acquired and held in the abovementioned step S3 in Fig. 2 is used in order to determine the abovementioned viral infection. Moreover, for example, the abovementioned judgment as to whether or not there is an HTML code, script code or binary data of a textualized program in the main body (text data) of the received email 6 is performed from the standpoint of whether or not an entity such as an HTML tag is contained, whether or not an entity such as a program language is contained, and whether or not characters that do not form a body as sentences are contained.

As a result of the determination of the danger of viral infection described above, in cases where it is determined that there is no danger of viral infection (no in step S5 of Fig. 2), the virus processing unit 10 transmits the email 6 to the transmission destination (step S6 in Fig. 2). On the other hand, in cases where it is determined that there is a danger of viral infection (yes in step S5 of Fig. 2), the email 6 is temporarily stored in the messaging virus protection system 1 without being transmitted (step S7 in Fig. 2). For example, the email 6 is stored in the storage unit 20. Then, after the characteristics of the new type of virus for which a warning was issued have been grasped, and the content has been defined in the pattern definition file 21, the stored email 6 is extracted, and the processing from step S8 in Fig. 2 (described later) is performed. In other words, processing such as virus eradication or the like is performed.

Thus, in the present messaging virus protection system 1, the system has a warning mode that is used when a new type of virus whose characteristics are still unknown appears, and this system allows only email 6 for which there is clearly no danger of viral infection to pass through. This point is one of the most important special features of the present messaging virus protection system 1. When a new type of virus appears, the effects of the inability to deliver mail can be minimized while ensuring safety. Furthermore, in cases where a certain degree of information has been obtained regarding a new type of virus, the email 6 that is allowed to pass through can be increased, so that the abovementioned effect is increased.

Now, returning to Fig. 2, in cases where information indicating that the abovementioned new virus warning mode is to be used is not input, so that the virus processing unit 10 judges that the mode to be used is not the new virus warning mode (no in step S4 of Fig. 2), virus detection processing is performed for the email 6 (step S8 in Fig. 2). In such processing, in concrete terms, the characteristics of attached files and the main body of the email 6 are compared with characteristics (patterns) of respective viruses defined in the pattern definition file 21, and it is determined whether or not corresponding characteristics are present.

As a result of this determination, in cases where the characteristics of the received email 6 do not agree with or show any similarity to the characteristics of any of the viruses defined in the pattern definition file 21, the virus processing unit 10 judges that no virus has been detected (no in step S9 of Fig. 2), and transmits the email 6 to the transmission destination (step S12 in Fig. 2). On the other hand, in cases where the characteristics of the received email 6 agree with or show similarity to the characteristics of any of the viruses defined in the pattern definition file 21, the virus processing unit 10 judges that a virus has been detected (yes in step S9 of Fig. 2), and performs virus deletion processing (step S10 in Fig. 2). In this processing, the virus processing unit 10 eradicates the virus by deleting the virus portions from the email 6. For example, in cases where the virus is an attached file that is attached to the email 6, the virus processing unit 10 deletes this attached file.

Subsequently, the virus processing unit 10 performs processing for the email 6 in which the abovementioned virus was detected, on the basis of the dimensions of this email 6 (step S11 in Fig. 2). This step is a characterizing feature of the present messaging virus protection system 1; here, various measures suited to the respective received emails 6 and viruses are executed on the basis of the settings in the setting file 22. The concrete processing content in this step will be described later; however, it may be said that more effective virus countermeasures that are suited to respective viruses can be taken by performing this processing (which is absent from conventional systems), so that the abovementioned problems can be solved.

Following the completion of the abovementioned processing, the virus processing unit 10 transmits the email 6 to the transmission destination, and ends processing (step S12 in Fig. 2). However, depending on the content of the processing in step S11 of Fig. 2, there may be cases in which the email 6 is not transmitted.

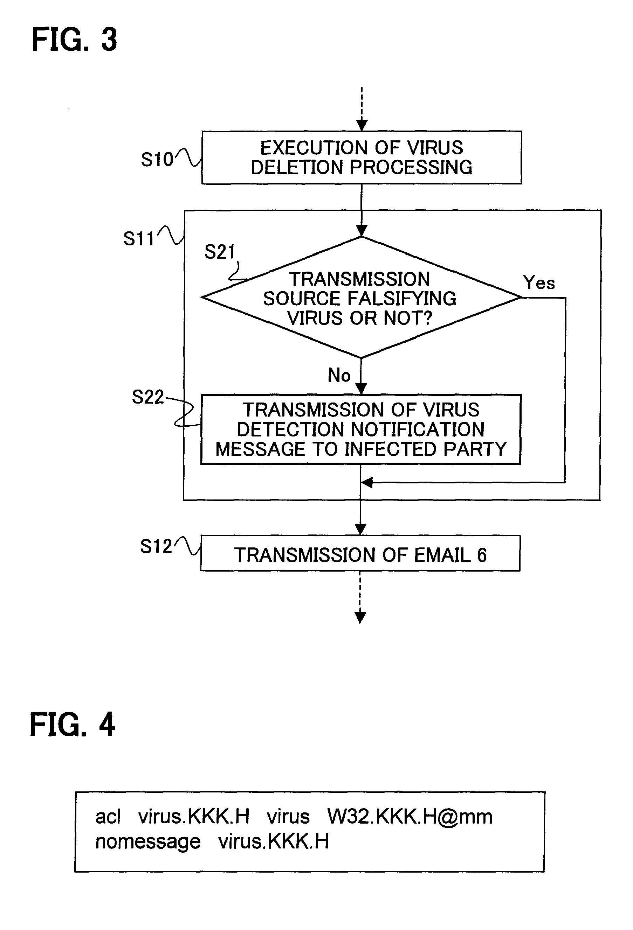

Next, the concrete content of the processing based on the dimensions of the email 6 (step S11 in Fig. 2) will be described. Fig. 3 is a flow chart showing one embodiment (a first embodiment) of this processing. This example refers to a case in which the virus detected in a received email 6 is a transmission source falsifying virus that misrepresents the transmission source mail address.

Following the abovementioned virus deletion processing (step S10), the virus processing unit 10 determines whether or not the detected virus is a transmission source falsifying virus (step S21 in Fig. 3). In the abovementioned virus detection processing (step S8 in Fig. 2), reference is made to the pattern definition file 21, and the type of virus is grasped at the point in time at which the virus is detected; accordingly, such a determination is made on the basis of this grasped virus type.

As a result, in cases where the detected virus is a transmission source falsifying virus (yes in step S21 of Fig. 3), the email 6 after the processing is transmitted to the transmission destination without transmitting a virus detection notification message indicating that a virus has been detected (step S12). On the other hand, in cases where the detected virus is not a transmission source falsifying virus (no in step S21 of Fig. 3), the abovementioned virus detection notification message is sent to the infected party (step S22 in Fig. 3). In this case, the abovementioned notification message is ordinarily sent to the transmission source. Afterward, the email 6 after the processing is transmitted to the transmission destination (step S12).

Fig. 4 shows an example of the description of the setting file 22 for processing based on the dimensions of the email 6 in the present embodiment (step S11). "W32.KKK.H@mm" in the figure is one example of a transmission source falsifying virus; the description in the second line of Fig. 4 means that in cases where "W32.KKK.H@mm" is detected, a virus detection notification message is not transmitted. The virus processing unit 10 refers to the corresponding portion of the setting file 22 that has been read into the memory, and executes the abovementioned processing of steps S21 and S22 in Fig. 3.

In the present embodiment, as was described above, no virus detection notification message is transmitted in cases where the detected virus is a transmission source falsifying virus. Accordingly, the sending of a virus detection notification message to a transmission source that did not actually transmit this virus can be prevented, so that the causing of trouble for the correspondent can be prevented. Furthermore, the transmission of wasted messages can be eliminated. On the other hand, in the case of not a transmission source falsifying virus, a virus detection notification message is transmitted to the infected party; this is effective in terms of eradicating the abovementioned virus and preventing further infection.

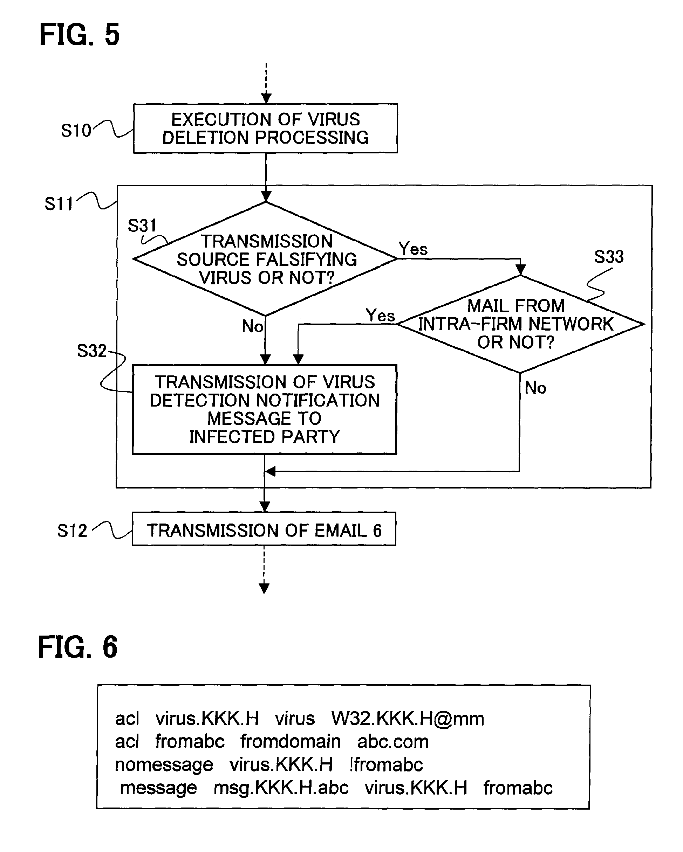

Next, Fig. 5 is a flow chart showing a second embodiment of processing based on the dimensions of the email 6 (step S11 in Fig. 2). This example also refers to a case in which the detected virus is a transmission source falsifying virus.

Following the abovementioned virus deletion processing (step S10), as in the abovementioned first embodiment, the virus processing unit 10 determines whether or not the detected virus is a transmission source falsifying virus (step S31 in Fig. 5). As a result, in cases where the detected virus is not a transmission source falsifying virus (no in step S31 of Fig. 5), a virus detection notification message is transmitted to the infected party (step S32 in Fig. 5) in the same manner as in the first embodiment. Then, the email 6 after the processing is transmitted to the transmission destination (step S12).

On the other hand, in cases where the detected virus is a transmission source falsifying virus (yes in step S31 of Fig. 5), it is determined whether or not the received email 6 is from a domain within the company (step S33 in Fig. 5). Specifically, it is determined whether or not the email 6 is an email from the intra-firm network 2. Such a determination is made by checking whether or not the domain of the transmission source mail address of the received email 6 is a domain within the firm that is the object of protection of the present messaging virus protection system 1.

As a result of this determination, in cases where the domain of the transmission source mail address is a domain within the firm (yes in step S33 of Fig. 5), a virus detection notification message is transmitted (step S32 in Fig. 5). Such a message may be transmitted to the transmission source of the email 6, or may be transmitted to a plurality of predetermined locations such as all of the client terminals (4a, 4b, ...) that are connected to the intra-firm network 2. Following the transmission of this message, the email 6 after the processing is similarly transmitted to the transmission destination (step S12).

On the other hand, as a result of the abovementioned determination, in cases where the domain of the transmission source mail address is not a domain within the firm (no in step S33 of Fig. 5), the email 6 after the processing is transmitted to the transmission destination without transmitting a virus detection notification message (step S12).

Fig. 6 shows an example of the description of the setting file 22 for the processing (step S11) based on the dimensions of the email 6 in the second embodiment. As in Fig. 4, "W32.KKK.H@mm" indicates one example of a transmission source falsifying virus, and "abc.com" indicates an intra-firm domain of a firm with the name of abc. Furthermore, "msg.KKK.H.abc" is the name of a file storing a virus detection notification message for "W32.KKK.H@mm" which is transmitted within the firm.

The description in the third line in Fig. 6 means that no virus detection notification message is transmitted in cases where "W32.KKK.H@mm" is detected, and the domain of the transmission source mail address is other than "abc.com". Furthermore, the description in the fourth line in Fig. 6 means that a message stored in "msg.KKK.H.abc" is transmitted in cases where "W32.KKK.H@mm" is detected, and the domain of the transmission source mail address is "abc.com". The virus processing unit 10 refers to the corresponding portion of the setting file 22, and executes the processing of the abovementioned steps S31 through S33 in Fig. 5.

In the present embodiment, as was described above, in cases where the detected virus is a transmission source falsifying virus, if the email 6 is an email from within the firm, a virus detection notification message is transmitted. On the other hand, if the email 6 is not an email from within the firm, a virus detection notification message is not transmitted. Accordingly, with respect to locations outside the firm, the transmission of virus detection notification messages to transmission sources that did not actually transmit the abovementioned viruses can be prevented, so that no trouble is caused for such correspondents. Furthermore, with respect to locations inside the firm, virus detection notification messages are transmitted to firm members or the like who understand the processing that is performed in the present messaging virus protection system 1; accordingly, little trouble is caused for the transmission destination of such messages, and conversely, notification that a transmission source falsifying virus is present within the firm can be given. Furthermore, by making the message that is transmitted a message relating to the abovementioned virus that is suited for the abovementioned firm, early notification of eradication methods and protective measures against the abovementioned virus can be given, so that the safety of the intra-firm network 2 can be ensured.

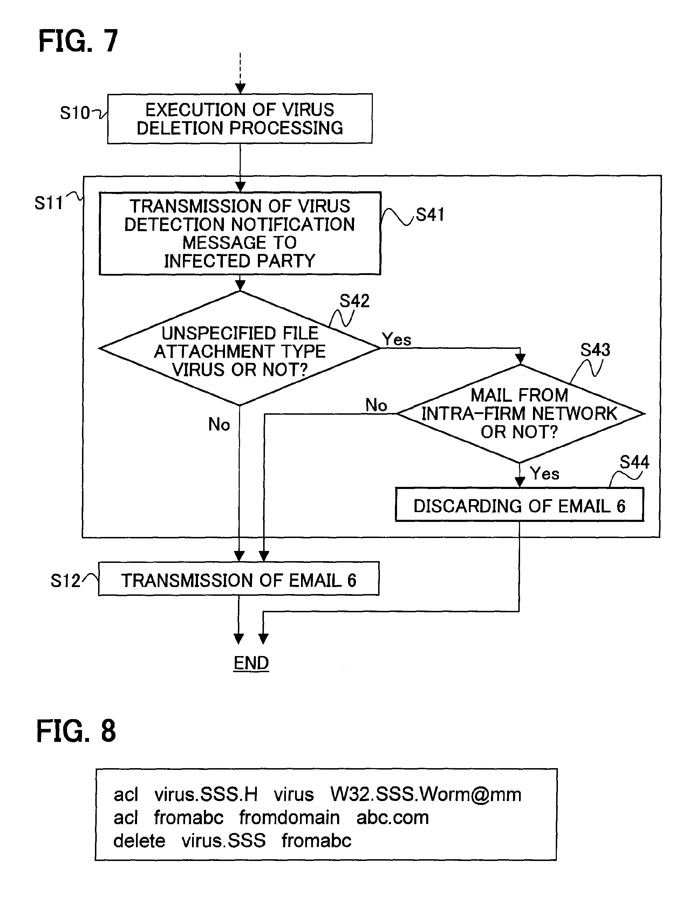

Next, Fig. 7 is a flow chart showing a third embodiment of the processing (step S11 in Fig. 2) based on the dimensions of the email 6. This example refers to a case in which the detected virus is an unspecified file attachment type virus which attaches one or more arbitrary files in the computer and emails these attached files along with the virus.

Following the abovementioned deletion processing (step S10), the virus processing unit 10 transmits a virus detection notification message indicating that a virus has been detected to the infected party (step S41 in Fig. 7). Subsequently, it is determined whether or not the detected virus is an unspecified file attachment type virus (step S42 in Fig. 7). This determination is accomplished on the basis of the types of viruses grasped in the abovementioned virus detection processing (step S8 in Fig. 2).

As a result of this determination, in cases where the detected virus is an unspecified file attachment type virus (yes in step S42 of Fig. 7), it is determined whether or not the received email 6 is from a domain within the firm (step S43 in Fig. 7). This determination is the same as in the case of the abovementioned second embodiment. As a result, in cases where the received email 6 is from a domain within the firm (yes in step S43 of Fig. 7), the received email 6 is discarded (step S44 in Fig. 7), and the processing is ended without transmitting the email 6.

On the other hand, in cases where the email 6 is not from a domain within the firm (no in step S43 of Fig. 7), this email 6 is transmitted to the transmission destination (step S12). Furthermore, in step S42 in Fig. 7, in cases where it is determined that the detected virus is not an unspecified file attachment type virus (no in step S42 of Fig. 7), the email 6 is transmitted to the transmission destination (step S12).

Fig. 8 shows an example of the description of the setting file 22 for processing (step S11) based on the dimensions of the email 6 in the third embodiment. "W32.SSS.Worm@mm" is one example of an unspecified file attachment type virus; furthermore, "abc.com" indicates an intra-firm domain of the firm abc. The description on the third line of Fig. 8 means that in a case where "W32.SSS.Worm@mm" is discovered, and the domain of the transmission source mail address is "abc.com", the mail is discarded. The virus processing unit 10 refers to the corresponding portion of the setting file 22 that has been read in, and executes the abovementioned steps S42 through S44 in Fig. 7.

In the present embodiment, as was described above, in cases where the detected virus is an unspecified file attachment type virus, the email 6 is discarded if the email 6 is an email from within the firm, and the email 6 is transmitted if the email 6 is not an email from within the firm. Accordingly, in this messaging virus protection system 1, even if the client terminals (4a, 4b, ...) within the firm are infected by an unspecified file attachment type virus, and unintended arbitrary files within these client terminals are attached to emails 6 that are sent from these client terminals, the emails 6 including these attached files are discarded, so that the leakage of information from within the firm can be prevented.

Furthermore, in the abovementioned example referring to Fig. 7, even in cases where the detected virus is an unspecified file attachment type virus, the email 6 is allowed to pass through if this email 6 is not an email 6 from within the firm; however, it would also be possible to devise the system so that the email 6 is discarded regardless of the transmission source of the email 6 in cases where the detected virus is an unspecified file attachment type virus. Specifically, it would also be possible to devise the system so that in the flow chart shown in Fig. 7, the processing proceeds to step S44 without passing through step S43 in the case of "yes" in step S42. In this case, the leakage of information from the respective networks that distribute email 6 via this messaging virus protection system 1 can be prevented.

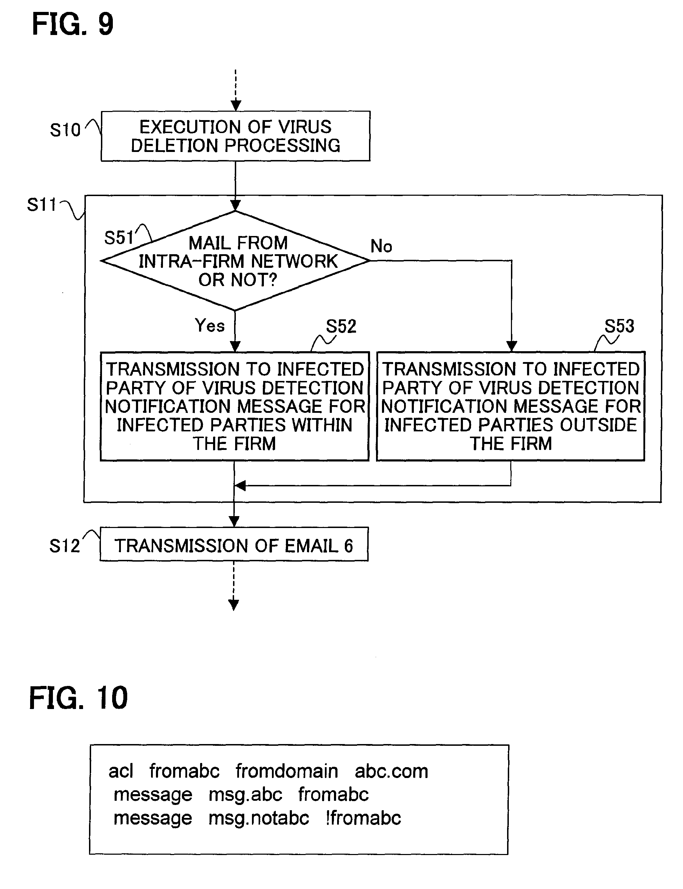

Next, Fig. 9 is a flow chart showing a fourth embodiment of processing (step S11 in Fig. 2) based on the dimensions of the email 6. This example refers to a case in which the content of the virus detection notification message that is sent when a virus is detected is varied according to the transmission destination.

Following the abovementioned virus deletion processing (step S10), the virus processing unit 10 determines whether or not the received email 6 is an email from a domain within the firm (step S51 in Fig. 9). This determination is the same as in the case of the abovementioned second embodiment. As a result, in cases where the received email 6 is an email from a domain within the firm, (yes in step S51 of Fig. 9), a virus detection notification message for infected parties within the firm is transmitted to the infected parties (step S52 in Fig. 9). On the other hand, in cases where the received email 6 is not an email from a domain within the firm (no in step S51 of Fig. 9), a virus detection notification message for infected parties outside the firm is transmitted to the infected parties (step S53 in Fig. 9). Furthermore, in either case, the email 6 is subsequently transmitted (step S12).

Fig. 10 shows an example of the description of the setting file 22 for processing (step S11) based on the dimensions of the email 6 in the fourth embodiment. "abc.com" in the figure indicates the intra-firm domain of the firm abc. Furthermore, "msg.abc" indicates a file that stores a virus detection notification message for infected parties within the firm, and "msg.notabc" indicates a file that stores a virus detection notification message for infected parties outside the firm. The description in the second line of Fig. 10 means that in cases where a virus is detected and the domain of the transmission source mail address is "abc.com", the message stored in "msg.abc" is transmitted. Similarly, the description in the third line of Fig. 10 means that in cases where a virus is detected and the domain of the transmission source mail address is other than "abc.com", the message stored in "msg.notabc" is transmitted. The virus processing unit 10 refers to the corresponding portion of the setting file 22 that has been read into the memory, and executes the abovementioned processing of steps S51 through S53 in Fig. 9.

In the present embodiment, as was described above, when a virus is detected, a message for locations within the firm is transmitted in cases where the email 6 is an email from within the firm, and a message for locations outside the firm is transmitted in cases where the email 6 is an email from outside the firm. As a result, more appropriate information that is suited to the transmission destination of the message can be provided than in cases where a uniform message is transmitted as in conventional systems, so that safety against messaging viruses can be further improved.

Above, a plurality of example embodiments were described for processing (step S11) based on the dimensions of the email 6. The present messaging virus protection system 1 can be set so that only processing in one of these embodiments is performed; ordinarily, however, the system is set so that a plurality of different types of processing indicated by these embodiments can be performed, and appropriate processing is selected from these types of processing and performed in accordance with the dimensions of the received email 6. Furthermore, in the case of types of processing that are mutually incompatible (among this plurality of types of processing), e. g., the processing in the first embodiment and the processing in the second embodiment, it is necessary to set which type of processing is to be used.

In the messaging virus protection system 1 of the present embodiment, as was described above, countermeasures that are more effective than those of conventional systems can be taken against new types of viruses, transmission source falsifying viruses, unspecified file attachment type viruses and the like. In the present embodiment, furthermore, so-called mail viruses accompanying the delivery of email 6 were described. However, viruses that are the object of processing of this messaging virus protection system 1 are not limited to mail viruses; messaging viruses in general that are transmitted along with the movement of electronic information, such as viruses that are transmitted together with the transfer of files via a network and the like, may also be treated using the messaging virus protection system 1.

The protected scope of the present invention is not limited to the abovementioned embodiment, but extends to include the inventions described in the claims, and entities that are equivalent to these inventions.

### INDUSTRIAL APPLICABILITY

The present invention can be utilized in order to deal with messaging viruses that are transmitted along with the movement of electronic information, comprising mainly email. In particular, there is no need to interrupt all mail delivery when a new type of messaging virus appears, so that the effects of mail interruption can be minimized. Furthermore, when a transmission source falsifying virus is received, wasteful and trouble-causing notification messages can be eliminated. Moreover, in cases where an unspecified file attachment type virus is receive, the leakage of information can be prevented.

## Claims

1. A messaging virus protection program which causes a computer to deal with messaging viruses that are transmitted along with the delivery of electronic information on a network, **characterized in that** said computer is caused to execute the steps of:
determining, when electronic information with said messaging virus is received, whether or not the messaging virus attached to said received electronic information is an unspecified file attachment type virus that attaches and transmits an arbitrary file in a computer, this being determined on the basis of predetermined characteristics of the messaging virus; and
transmitting said received electronic information to the transmission destination in cases where it is determined that said received messaging virus is not an unspecified file attachment type virus, but not transmitting said received electronic information in cases where it is determined that said received messaging virus is an unspecified file attachment type virus.

2. A messaging virus protection program which causes a computer to deal with messaging viruses that are transmitted along with electronic information that is distributed between a specified network and another network, **characterized in that** said computer is caused to execute the steps of:
determining, when electronic information with said messaging virus is received, whether or not the messaging virus attached to said received electronic information is an unspecified file attachment type virus that attaches and transmits an arbitrary file in a computer, this being determined on the basis of predetermined characteristics of the messaging virus;
transmitting said received electronic information to the transmission destination in cases where it is determined that said received messaging virus is not an unspecified file attachment type virus, and determining whether or not said received electronic information has been transmitted from said specified network in cases where it is determined that said receive messaging virus is an unspecified file attachment type virus; and
transmitting said received electronic information in cases where it is determined that said received electronic information has not been transmitted from said specified network, but not transmitting said received electronic information in cases where it is determined that said received electronic information has been transmitted from said specified network.

3. The messaging virus protection program according to claim 2, **characterized in that** said specified network is a network installed in a specified company.

4. A messaging virus protection system which deals with messaging viruses that are transmitted along with the delivery of electronic information on a network, said system comprising:
a storage unit which stores information of the characteristics of known messaging viruses whose characteristics have been determined beforehand; and
a virus processing unit which determines, when electronic information with said messaging virus is received, whether or not the messaging virus attached to said received electronic information is an unspecified file attachment type virus which attaches and transmits an arbitrary file in a computer, this being determined on the basis of characteristics of the messaging viruses stored in said storage unit, and
in cases where it is determined that said received messaging virus is not an unspecified file attachment type virus, transmits said received electronic information to the transmission destination, while in cases where it is determined that said received messaging virus is an unspecified file attachment type virus, does not transmit said received electronic information.

5. A messaging virus protection method in a computer system which deals with messaging viruses that are transmitted along with the delivery of electronic information on a network, the method comprising:
a step where said computer system determines, when electronic information with said messaging virus is received, whether or not the messaging virus attached to said received electronic information is an unspecified file attachment type virus that attaches and transmits an arbitrary file in a computer, this being determined on the basis of characteristics of messaging viruses determined beforehand; and
a step where said computer system transmits said received electronic information to the transmission destination in cases where it is determined that said received messaging virus is not an unspecified file attachment type virus, but does not transmit said received electronic information in cases where it is determined that said received messaging virus is an unspecified file attachment type virus.
